# EUROPEAN PATENT SPECIFICATION

(11) **EP 1 515 535 B1**
(45) Date of publication and mention of the grant of the patent: **30.08.2017**
(21) Application number: 04255509.4
(22) Date of filing: 10.09.2004
(51) Int. Cl.: H04N 1/32, H04N 1/00

(54) **Service provision device, service provision program, recording medium, and service provision method**
Dienstbereitstellungseinrichtung, Dienstbereitstellungsprogramm, Dienstbereitstellungsverfahren und -aufzeichnungsmedium
Système, programme et méthode de mise à disposition de service et support d'enregistrement

(30) Priority: 11.09.2003 JP 2003320289; 10.08.2004 JP 2004233689
(43) Date of publication of application: 16.03.2005
(73) Proprietor: Ricoh Company, Ltd., Tokyo 143-8555 (JP)
(72) Inventor: Araumi, Yuichi, Ohta-ku Tokyo (JP); Tsujigaito, Shingo, Yokohama-shi Kanagawa (JP)
(74) Representative: Mounteney, Simon James

(56) References cited:
- EP-A- 1 143 695
- WO-A-02/39246
- US-A- 5 720 015
- US-A1- 2002 114 004
- US-A1- 2002 140 969
- US-A1- 2002 144 162

## Description

### BACKGROUND OF THE INVENTION

### 1. Field of The Invention

The present invention relates to a service provision device, a service provision program, a recording medium, and a service provision method.

### 2. Description of The Related Art

In recent years, the image forming apparatus (which is called the multi-function peripheral system or MFP) in which the functions of the devices, including the printer, the copier, the facsimile and the scanner, are unified has came to be known. The multi-function peripheral system is operated as any of the printer, the copy, the facsimile and the scanner by providing the display unit, the printing unit, the image pick-up unit, etc. in one housing and implementing the four kinds of applications corresponding to the printer, the copier, the facsimile and the scanner, respectively, and activating one of the applications (see Japanese Laid-Open Patent Application No. 2002-084383).

However, the conventional multi-function peripheral system has no function to manage the option which is set up by the user and associated with the document (image data) used as the candidate for printing, when using the printer ability of the multi-function peripheral system from the client PC (personal computer) connected to the conventional multi-function peripheral system through the network. For this reason, every time the user transmits a printing request to the conventional multi-function peripheral system, the user must set up the option for printing.

EP1143695 discloses a Web server function which is provided for an image processing apparatus including a scanner, a printer, an email function, a fax function and such like to make the image processing apparatus generate a list of information about the status of jobs and data stored in a storage unit as a Web page.

### SUMMARY OF THE INVENTION

An object of the present invention is to provide an improved service provision device in which the above-described problems are eliminated.

Another object of the present invention is to provide a service provision device which efficiently provides the user with the service.

The invention is the device of Claim1, the method of Claim 9 and the corresponding computer program product and computer-readable recording medium of Claims 12 and 21.

In addition, the service provision unit in the claims corresponds to, for example, the printing service provision service 10 which will be described later. The receiving unit in the claims corresponds to, for example, the receiving unit 11 or the printing service reception class 101 which will be described later.

Moreover, the service unit in the claims corresponds to, for example, the service unit 12 or the printing service class 104 which will be described later. Moreover, the job execution unit in the claims corresponds to, for example, the job execution unit 13 or the printer class 105 which will be described later.

Moreover, the session unit in the claims corresponds to, for example, the session unit 14 or the printing session class 103
which will be described later. Moreover, the session management unit in the claims corresponds to, for example, the session management unit 15 or the session management class 102 which will be described later.

Moreover, the document database unit in the claims corresponds to, for example, the document database unit 16 or the document database class 107 which will be described later. Moreover, the instruction unit in the claims corresponds to, for example, the instruction unit 17 or the printing instruction class 109 which will be described later.

Moreover, the instruction management unit in the claims corresponds to, for example, the instruction management unit 18 or the printing instruction management class 106 which will be described later. Moreover, the record unit in the claims corresponds to, for example, the record unit 19 or the printing record class 113 which will be described later.

According to the service provision device of the present invention, it is possible to efficiently provide the user with the service with no need to set up the option for printing every time the user transmits a printing request to the image forming apparatus as in the conventional multi-function peripheral system.

### BRIEF DESCRIPTION OF THE DRAWINGS

Other objects, features and advantages of the present invention will be apparent from the following detailed description when reading in conjunction with the accompanying drawings.
FIG. 1 is a block diagram showing the functional composition of the multi-function peripheral system in which the service provision device of the present invention is embodied.
FIG. 2 is a block diagram showing the hardware composition of the multi-function peripheral system of FIG. 1.
FIG. 3 is a block diagram showing the functional composition of the printing service provision device of the invention.
FIG. 4 is a class diagram for explaining an example of the printing service provision model of the invention.
FIG. 5 is a diagram for explaining an example of the class which creates the instance at the time of starting of the multi-function peripheral system.
FIG. 6 is a diagram for explaining an example of the class which creates the instance at the time of the session start.
FIG. 7 is a diagram for explaining an example of the class which creates the instance at the time of printing instruction creation.
FIG. 8 is a diagram for explaining an example of the interaction at the time of the session start.
FIG. 9 is a diagram for explaining an example of the interaction at the time of printing instruction creation.
FIG. 10 is a diagram for explaining an example of the interaction at the time of the entry of specified document printing.
FIG. 11 is a diagram for explaining an example of the interaction at the time of the job end of the specified document printing.
FIG. 12 is a class diagram for explaining another example of the printing service provision model of the invention.
FIG. 13 is a diagram for explaining an example of the interaction at the time of job information acquisition.
FIG. 14 is a diagram for explaining an example of the interaction at the time of job list acquisition.
FIG. 15 is a block diagram showing the functional composition of the multi-function peripheral system in which the service provision device of the present invention is embodied.
FIG. 16 is a class diagram for explaining an example of the service provision model of the invention.
FIG. 17 is a diagram for explaining an example of the interaction at the time of the session start and succession when there are two or more sessions in association with one service.
FIG. 18 is a diagram showing an example of the table which associates the session and the service.
FIG. 19 is a diagram for explaining an example of the interaction at the time of the session start and succession when there are two or more services in association with one session.
FIG. 20 is a diagram showing an example of the table which associates the user and the available service.

### DETAILED DESCRIPTION OF PREFERRED EMBODIMENTS

A description will now be given of the preferred embodiments of the invention with reference to the accompanying drawings.

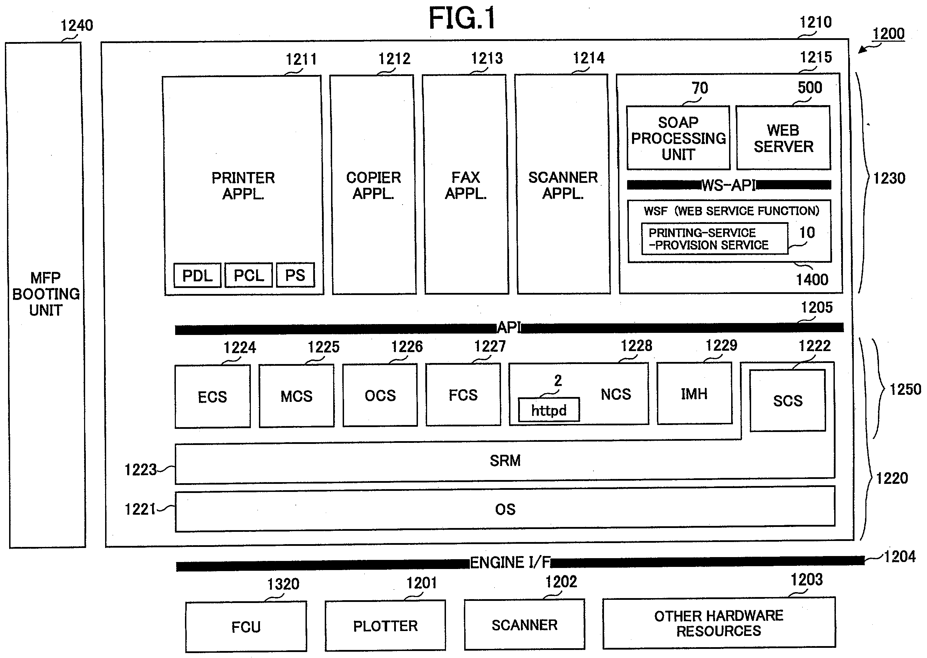

FIG. 1 is a block diagram showing the functional composition of the multi-function peripheral system in which the service provision device of the present invention is embodied.

As shown in FIG. 1, the multi-function peripheral system (MFP) 1200 comprises the plotter 1201, the scanner 1202, the FCU (fax control unit) 1320, the other hardware resources 1203, the software group 1210 which includes the platform 1220 and the applications 1230, and the MFP booting unit 1240.

The MFP booting unit 1240 is first initiated upon power up of the multi-function peripheral system 1200, and starts execution of the platform 1220 and the applications 1230.

The platform 1220 includes the control services 1250 which interpret the processing request from the applications 1230 and generates the acquisition request of the hardware resources, the SRM (system resource manager) 1223 which performs management of one or more hardware resources and arbitrates the acquisition requests from the control services 1250, and the OS (operating system) 1221.

The control service 1250 is formed of two or more service modules. Specifically, the service modules include SCS (system control service) 1222, ECS (engine control service) 1224, MCS (memory control service) 1225, OCS (operation panel control service) 1226, FCS (fax control service) 1227, NCS (network control service) 1228, and IMH (imaging memory handler) 1229.

In addition, the platform 1220 includes the API (application program interface) 1205 which enables the processing request from the applications to be received in accordance with the pre-defined function.

The OS 1221 is the operating system, such as UNIX (registered trademark), and carries out the parallel execution of the respective software units of the platform 1220 and the applications 1230 as a process.

The SRM 1223 performs control of the system and management of the resources with the SCS 1222, and arbitrates and carries out execution control according to the request from the high-order layer for using the hardware resources of the engine unit of the plotter 1201 or the scanner 1202, the memory, the HDD files, and the host I/O (Centronics I/F, network I/F, IEEE1394 I/F, RS232C I/F, etc.).

The SCS 1222 carries out the processing of the application management, the operation panel control, the system screen display, the LED display, the hardware-resource management, the interruption application control, etc.

The ECS 1224 controls the engine unit of the FCU 1320, the plotter 1201, the scanner 1202, and the other hardware resources 1203, and carries out the image reading, the printing operation, the state notification, the jam recovery, etc.

The MCS 1225 performs the memory control. More specifically, it carries out the compression and expansion of image data, the acquisition and releasing of the image memory, the use of the hard disk drive (HDD), etc.

The OCS 1226 is the module which controls the operation panel which is the communication unit between the operator and the MFP main part control. It carries out the processing to notify the operator's key stroke event to the main part control, the processing to provide the library function used for each application to create the GUI information, the processing to manage the created GUI information for each of the respective applications, the processing to display the reflection processing to the operation panel, etc.

The FCS1227 provides the interface for each application layer of the system controller to perform the facsimile transmission and reception using the PSTN/ISDN network, and performs the registration/quotation of the various facsimile data managed by the BKM (backup SRAM), the facsimile reading, the facsimile reception and printing, and the integrated transmission and reception.

The NCS 1228 is the module group which provides the service used in common to the applications which need the network I/O. It serves as the agent for distributing the data of each protocol received from the network side to the respective applications, and for transmitting the data from the respective applications to the network side.

In this embodiment, the NCS 1228 controls the data communication with the network device, connected through the Internet to the MFP by the httpd (hypertext transfer protocol daemon) 2, using HTTP (hypertext transfer protocol) among two or more protocols. It starts two or more Web services, required for the processing which is specified by the HTTP request header, by using the function call, and notifies the processing results of the Web services to the network device using the HTTP response. For example, the Web services carry out the processing according to the message described in the XML (extensible markup language).

The IMH 1229 carries out the mapping of the image data from the virtual-memory region (user virtual space) to the physical memory. Upon start of the process, the system call is performed, and the processing to perform the mapping of the virtual-memory region for the process, and the processing to release the virtual-memory region with which the mapping is done at the time of the process termination are performed.

The applications 1230 include the printer application 1211 (which is the application for the printer and has the page description language (PDL), PCL, and PostScript (PS)), the copier application 1212 (which is the application for the copier), the fax application 1213 (which is the application for the facsimile), the scanner application 1214 (which is the application for the scanner), and the Web service processing application 1215 which is the Web service application.

In addition, the respective applications 1211-1215 may be implemented, in advance, in the software group 1210 of the multi-function peripheral system 1200, or may be implemented therein through the network. Alternatively, the respective applications 1211-1215 may be implemented therein by reading them from a computer-readable recording medium and loading them into the MFP.

The Web service processing application 1215 includes the SOAP processing unit 70 which performs message exchange according to the SOAP (simple object access protocol), and the Web service function (WSF) 1400 which performs predetermined processing through the API 1205 using the control service 1250 and provides the processing result, as the Web service, through the WS-API (Web service application program interface).

Furthermore, the Web service processing application 1215 processes the HTTP request by the GET method or the POST method, performs predetermined processing through the API 1205 with the Web server 500 which transmits the HTTP response containing the HTML using the control service 1250, and provides the processing result, as the Web service, through the WS-API by using the Web service function 1400.

The printing service provision service which provides the printing-related service and includes each class and/or the instance which is created from each class, shown in the printing service provision model which will be mentioned later, is contained in the Web service processing application 1215 as one of the Web service functions 1400.

In addition, the repository application and the ticket management application which will be described later may be included in the applications 1230.

In addition, in the above-mentioned embodiment of FIG. 1, the printing service provision service 10 is included in the Web service function 1400. Moreover, in addition to the printing service, the scanner service provision service which provides the scanner service, the copy service provision service which provides the copying service, and the fax service provision service which provides the fax service may be included therein.

Moreover, apart from the composition in which the printing service provision service 10, the copy service provision service, the fax service provision service, the scanner service provision service, etc. are separately included in the Web service function 1400, it is possible to use the composition in which one integrated service provision service containing the respective services is included in the Web service function 1400.

However, in the following, it is assumed that only the printing service provision service 10 is included in the Web service function 1400, unless otherwise specified, for the sake of simplification of explanation.

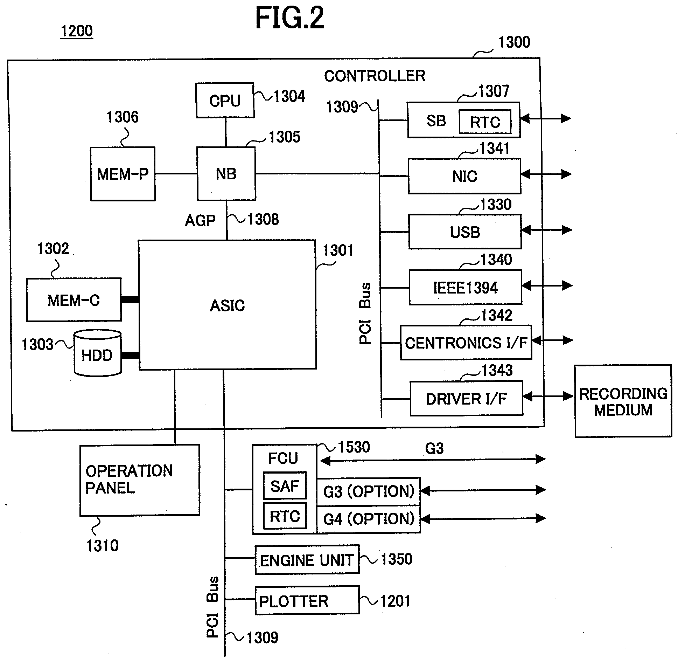

Next, an example of the hardware composition of the multi-function peripheral system 1200 will now be explained using FIG. 2.

FIG. 2 is a block diagram showing the hardware composition of the multi-function peripheral system of FIG. 1.

As shown in FIG. 2, the multi-function peripheral system 1200 has the composition in which the operation panel 1310, the fax control unit (FCU) 1530, the engine unit 1350 (to which the scanner 1202 is connected), the plotter 1201, and the ASIC 1301 of the controller 1300 are interconnected by the PCI (peripheral component interconnect) bus 1309.

In the controller 1300, the ASIC 1301 and the CPU 1304 are connected through the NB 1305 of the CPU chip set, and the MEM-C 1302 and the HDD (hard disk drive) 1303 are connected to the ASIC 1301.

The CPU 1304 performs control of the whole multi-function peripheral system 1200. More specifically, it performs starting and execution of SCS 1222, SRM 1223, ECS 1224, MCS 1225, OCS 1226, FCS 1227 and NCS 1228, which form the platform 1220 on the OS 1221, respectively, and performs starting and execution of the printer application 1211, the copier application 1212, the fax application 1213, the scanner application 1214 and the Web service processing application 1215, which form the applications 1230 on the OS 1221, respectively.

The NB (north bridge) 1305 is the bridge for connecting the CPU 1304 with the MEM-P 1306, the SB (south bridge) 1307, the NIC (network interface card) 1341, the USB (universal serial bus) 1330 and the IEEE1394 I/F 1340, the Centronics I/F 1342, the driver I/F 1343 and the ASIC 1301.

The MEM-P 1306 is a system memory used as memory for image drawing of the multi-function peripheral system etc. The SB 1307 is the bridge for connecting the NB 1305, the ROM, the PCI device, and the peripheral device. The SB 1307 has the RTC (real time clock) which measures the time in the controller 1300.

Moreover, the SB 1307 has the USB host inside and is able to receive data from another USB target and take in the image data from the camera of USB connection if it is connected thereto.

The driver I/F 1343 is the interface unit used for reading the program or application from the inserted recording medium which stores the program or application, and for loading it in the multi-function peripheral system 1200. In addition, the recording medium may be the SD memory card, the Smart Media, the multimedia card, the Compact Flash (registered trademark), etc.

The MEM-C1302 is the local memory (LM) used as the image buffer for the copying or the code buffer. The ASIC 1301 is the image-processing-application-specific integrated circuit (IC) having the hardware elements used for the image processing.

The HDD 1303 is the storage which performs the accumulation of the image data, the accumulation of the programs, the accumulation of the font data, the accumulation of the forms, and the accumulation of the documents. The operation panel 1310 is a control unit which performs the receiving of the input operation from the operator and the displaying of the operational message to the operator.

When the RAM interface for connecting the MEM-C 1302 and the hard disk interface for connecting the HDD 1303 are provided in the ASIC 1301 and it outputs and inputs the image data to these storage units, the I/O place is changed to the RAM interface or the hard disk interface.

The AGP 1308 is the bus interface for the graphics accelerator card proposed in order to accelerate the graphic operation, and increases the graphics accelerator card processing speed by carrying out the direct access to the system memory with high throughput.

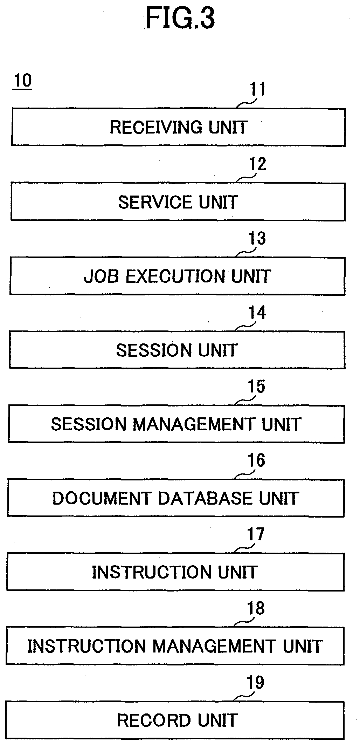

Next, the functional composition of an example of the printing service provision service 10 will now be described using FIG. 3.

FIG. 3 is a block diagram of the functional composition of an example of the printing service provision service 10.

As shown in FIG. 3, the printing service provision service 10 includes the receiving unit 11, the service unit 12, the job execution unit 13, the session unit 14, the session management unit 15, the document DB (database) unit 16, the instruction unit 17, the instruction management unit 18, and the record unit 19.

The receiving unit 11 receives the request from the client which is connected through the network to the printing service provision service 10 and uses the printing-related service.

Moreover, the receiving unit 11 associates the session ID, which identifies the session between the client using the printing-related service and the printing service provision service 10, with the service unit 12, and holds the association using the table or the like.

The service unit 12 provides the printing-related service which is created in response to the request received from the client using the printing-related service. For example, the printing-related service provided by the service unit 12 is created in response to the session start request of the session of the client and the printing service provision service 10.

The job execution unit 13 provides the interface to the processing executor which performs the processing concerning the printing-related service, and performs the job related to the service-related processing.

The session unit 14 provides the session of the printing service provision service 10 and the client using the printing-related service.

The session management unit 15 manages the session of the client using the printing-related service and the printing service provision service 10.

The document DB unit 16 provides the interface to the document manager which manages the document.

The instruction unit 17 provides the printing instruction, containing the information (for example, the printing-related attribute information) concerning the contents of printing, which is created in response to the request received from the client using the printing-related service.

The instruction management unit 18 manages the printing instruction containing the information (for example, the printing-related attribute information) concerning the contents of printing.

The record unit 19 provides the interface to the hardware (for example, the HDD 1303) which accumulates the printing records.

In the following preferred embodiments, the above-described functions of the printing service provision service 10 are implemented using classes of the object-oriented programming.

A description will be given of the first preferred embodiment of the present invention.

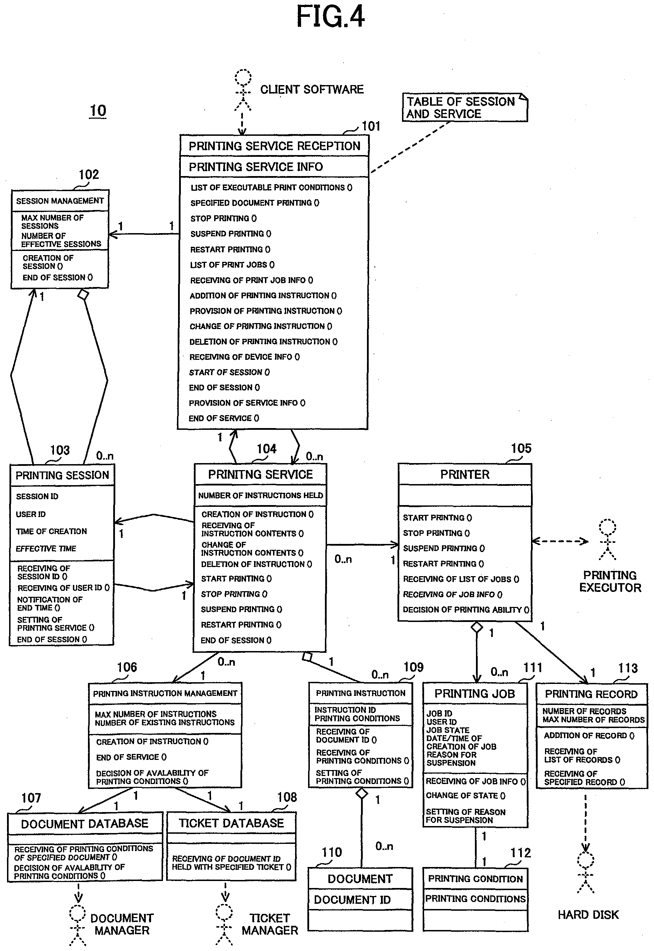

An example of the relation between the classes in the printing service provision model of the present invention will be explained using FIG. 4.

FIG. 4 is a class diagram for explaining an example of the printing service provision model of the present invention.

As shown in FIG. 4, the printing service provision model of the present invention comprises the printing service reception class 101, the session management class 102, the printing session class 103, the printing service class 104, the printer class 105, the printing instruction management class 106, the document DB class 107, the ticket DB class 108, the printing instruction class 109, the document class 110, the printing job class 111, the printing condition class 112, and the printing record class 113.

The printing service reception class 101 is the class which receives the request from the client software which is installed in the client PC, etc.

The session management class 102 is the class which manages the session of the client software and the printing service provision service 10.

The printing session class 103 is the class which provides one session of the client software and the printing service provision service 10.

The printing service class 104 is the class which provides the printing-related service while the session provided by the printing session class 103 is effective.

The printer class 105 is the class which provides the interface to the printing executor which performs the printing, and performs the printing-related job. In addition, the printing executor may be the software (for example, the printer application 1211) which performs the printing.

The printing instruction management class 106 is the class which manages the printing instruction containing the attribute information, such as the document ID which identifies the document, the printing conditions, the file information, and the printing mode.

In addition, the printing conditions may include the number of copies, the paper size, the paper tray, the ejection tray, the staple position, the punch position, the double-sided specification, the cover specification, the sort specification, etc.

Moreover, the file information may include the document name, the accumulation date, the time of accumulation, the paper size, the staple position, the punch position, the double-sided specification, the cover specification, the sort specification, etc. Moreover, the printing mode may include the resolution etc.

The document DB class 107 is the class which provides the interface to the document manager which manages the document. In addition, the document manager may be the software (for example, the repository application) which manages the document.

The ticket DB class 108 is the class which provides the interface to the ticket manager which manages the ticket which is the document-use permission which permits the use of the document. In addition, the ticket manager may be the software (for example, the ticket management application) which manages the ticket.

The printing instruction class 109 is the class which provides the printing instruction.

The document class 110 is the class which provides the document.

The printing job class 111 is the class which provides one printing-related job.

The printing condition class 112 is the class which provides the printing conditions concerning the printing-related job provided by the printing job class 111.

The printing record class 113 is the class which provides the interface to the hard disk (for example, the HDD 1303) which accumulates the printing-related records.

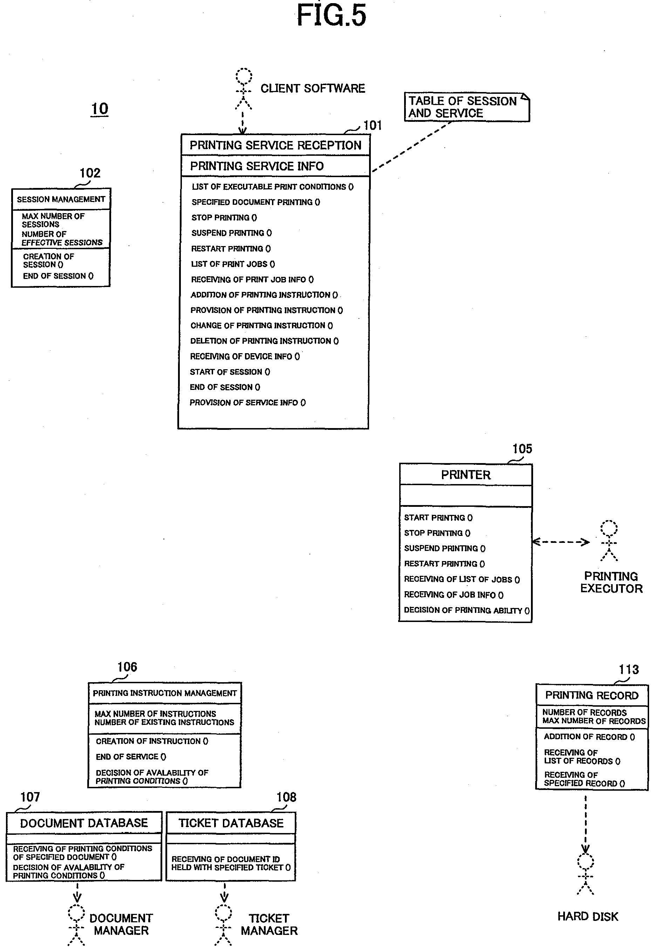

An example of the class which creates the instance at the time of starting of the multi-function peripheral system 1200 will now be explained using FIG. 5.

FIG. 5 is a diagram for explaining an example of the class which creates the instance at the time of starting of the multi-function peripheral system.

As shown in FIG. 5, at the time of starting of the multi-function peripheral system 1200, the instances of the printing service reception class 101, the session-management class 102, the printer class 105, the printing instruction management class 106, the document DB class 107, the ticket DB class 108 and the printing record class 113 are created.

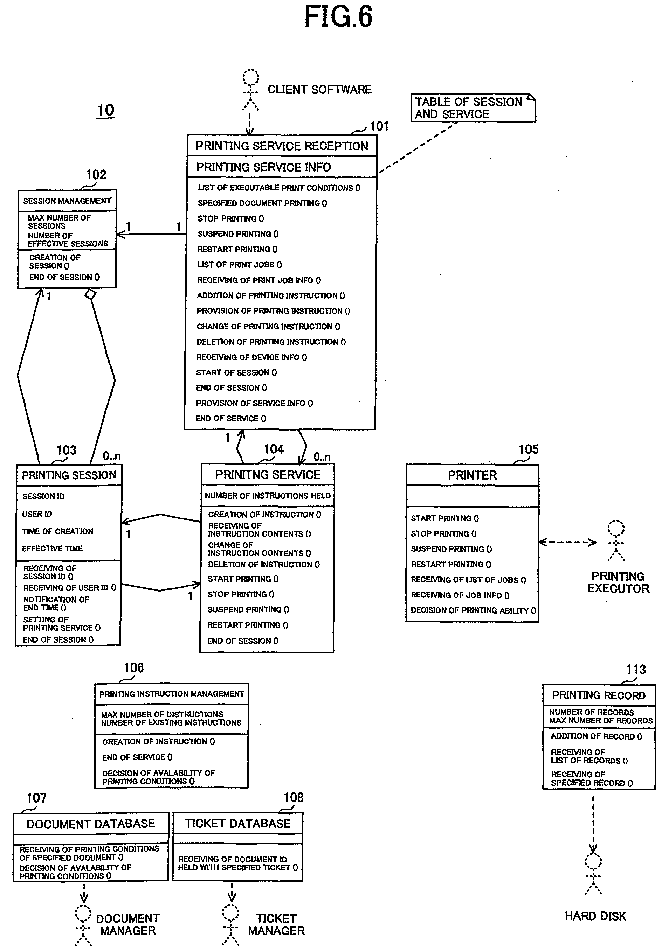

An example of the class which creates the instance at the time of the session start will now be explained using FIG. 6.

FIG. 6 is a diagram for explaining an example of the class which creates the instance at the time of the session start.

As shown in FIG. 6, when the printing session, which is the session of the client software and the printing service provision service 10, is started, the instances of the printing session class 103, and the printing service class 104 are further created in addition to the instances shown in FIG.5.

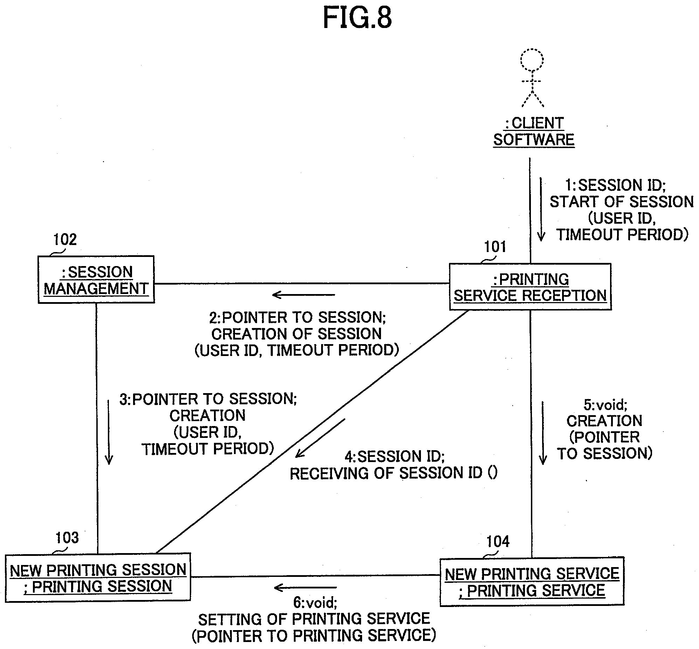

In addition, the interaction between the respective instances at the time of starting the session will be explained later using FIG. 8.

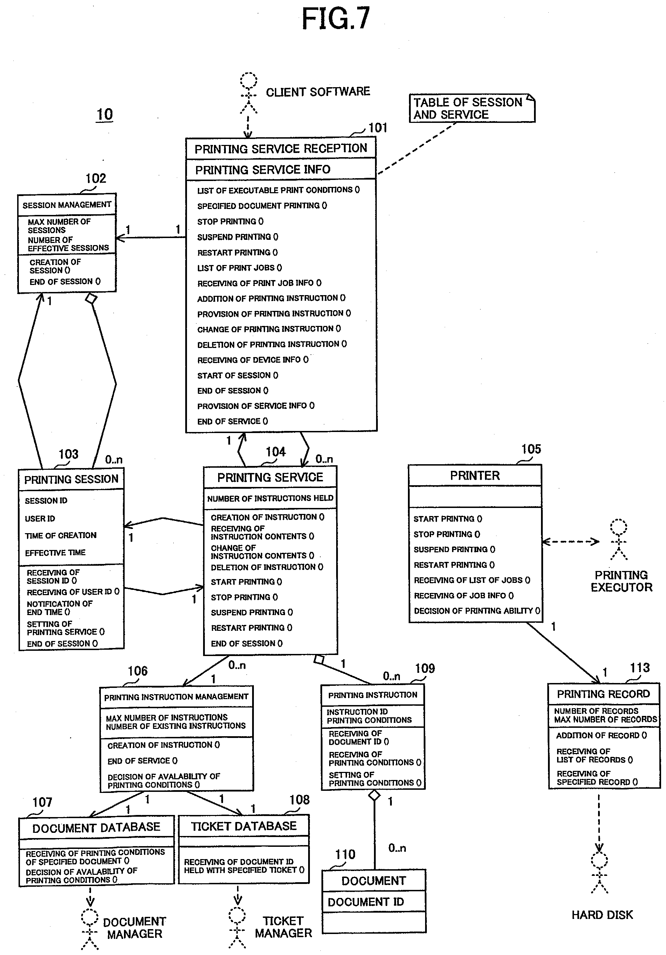

An example of the class which creates the instance at the time of printing instruction creation will now be explained using FIG. 7.

FIG. 7 is a diagram for explaining an example of the class which creates the instance at the time of printing instruction creation.

As shown in FIG. 7, when the printing instruction is created, the instances of the printing instruction class 109 and the document class 110 are further created in addition to the instances shown in FIG. 6.

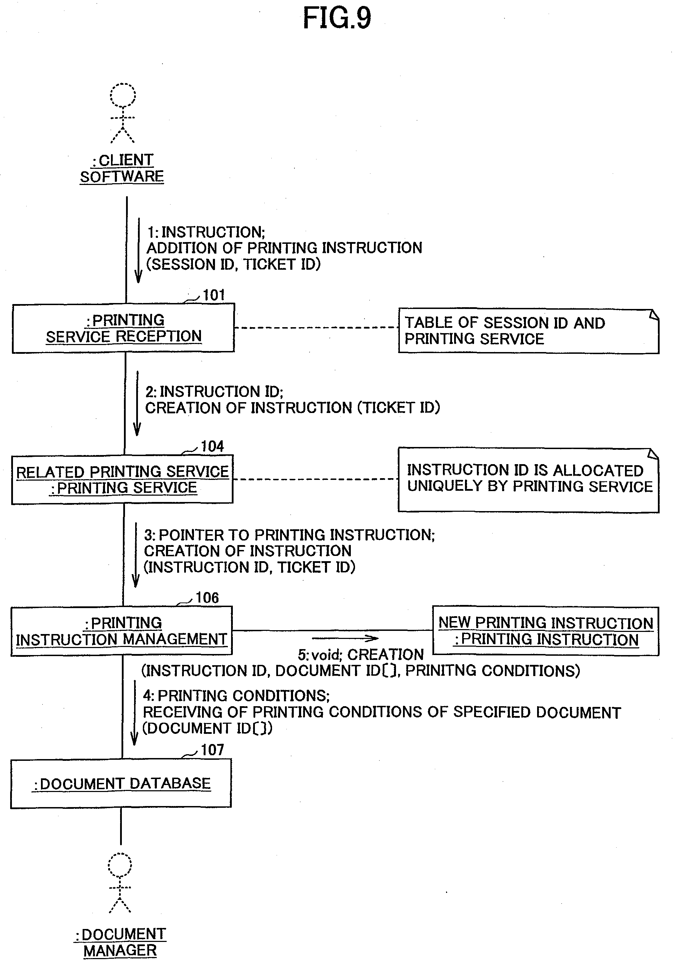

In addition, the interaction between the respective instances at the time of creating the printing instruction will be explained later using FIG. 9.

The interaction between the respective instances at the time of the session start will now be explained using FIG. 8.

FIG. 8 is a diagram for explaining an example of the interaction between the respective instances at the time of the session start.

In the sequence 1 of FIG. 8, the client software calls the session start method of the instance (also called the printing service reception object) of the printing service reception class 101 for the user ID which identifies the user, and the effective time (also called the time-out period) of the session as an argument.

In the sequence 2 of FIG. 8, the session start method of the printing service reception object calls the session creation method of the instance (also called the session-management object) of the session-management class 102 for the user ID passed as an argument, and the time-out period as an argument.

In the sequence 3 of FIG. 8, the session creation method of the session-management object creates the printing session which is the instance (also called the printing session object) of the printing session class 103 considering the user ID passed as an argument, and the time-out period as an argument, and acquires the pointer to the printing session as a return value.

The session creation method of the session-management object passes the pointer to the printing session to the session start method of the printing service reception object as a return value of the method concerned.

In addition, the printing session represents the session of the client software and the printing service provision service 10, and exists effectively during the time-out period passed as an argument.

Moreover, the printing session class 103 holds as an attribute the user ID, the time-out period, etc. which are passed as an argument.

In the sequence 4 of FIG. 8, the session start method of the printing service reception object calls the session ID acquisition method of the printing session object created in the sequence 3 of FIG. 8, and acquires the session ID which identifies the printing session which is the printing session object as a return value.

Therefore, in the printing service reception class 101, the pointer to the printing session and the session ID of the printing session can be associated with each other, and the association can be held in the table etc. as an attribute and it can be managed.

In the sequence 5 of FIG. 8, the session start method of the printing service reception object creates the printing service which is the instance (also called the printing service object) of the printing service class 104 by making the pointer to the printing session into the argument.

Therefore, in the printing service reception class 101, the pointer to the printing session, the session ID of the printing session, and the printing service which is the printing service object created by itself can be associated with each other, and the association can be held in the table etc. as an attribute and it can be managed.

In the sequence 6 of FIG. 8, the printing service which is the printing service object calls the printing service setting method of the printing session object created in the sequence 3 of FIG. 8 by making the pointer to the printing service concerned into the argument.

Therefore, the printing session which is created on the occasion of the session start, and the printing service are associated with each other.

In addition, the session start method of the printing service reception object passes the session ID acquired in the sequence 4 of FIG. 8 to the client software as a return value of the method concerned.

By performing processing as shown in FIG. 8, the session between the client software and the printing service provision service 10 can be started.

The interaction between the respective instances at the time of creation of the printing instruction will now be explained using FIG. 9.

FIG. 9 is a diagram for explaining an example of the interaction between the respective instances at the time of printing instruction creation.

In the sequence 1 of FIG. 9, the client software calls the printing instruction addition method of the printing service reception object by making into the argument the ticket ID which identifies the ticket which is the document-use permission which permits the use of the document from the session ID.

In the sequence 2 of FIG. 9, the printing instruction addition method of the printing service reception object calls the instruction creation method of the printing service object corresponding to the session ID which is passed as an argument, by making into the argument the ticket ID passed as the argument.

In addition, as mentioned above, the printing service reception class 101 associates the pointer to the printing session, the session ID of the printing session and the printing service which is the printing service object created by itself, and holds and manages the associate in the table as an attribute. Hence, it can determine the printing service corresponding to the session ID passed as an argument.

In the sequence 3 of FIG. 9, the instruction creation method of the printing service object calls the instruction creation method of the instance (also called the printing instruction management object) of the printing instruction management class 106 considering the instruction ID identify the printing instruction which the ticket ID passed as an argument and the instruction creation method concerned allocation as an argument.

In the sequence 4 of FIG. 9, the instruction creation method of the printing instruction management object calls the printing condition acquisition method of the specified document of the instance (also called the document DB object) of the document DB class 107 by making into the argument the document ID which is contained in the ticket ID passed as an argument and which identifies the document.

From the document manager, the printing condition acquisition method of the specified document of the document DB object acquires the printing conditions of the document corresponding to the document ID passed as an argument, and passes them to the instruction creation method of the printing instruction management object by making the printing conditions of the acquired document into the return value.

In the sequence 5 of FIG. 9, the instruction creation method of the printing instruction management object draws up the printing instruction which is the instance of the printing instruction class 109 considering the instruction ID passed as an argument, the document ID contained in the ticket ID passed as an argument, and the printing conditions acquired in the sequence 4 of FIG. 9 as an argument.

Moreover, the instruction creation method of the printing instruction management object passes the pointer to the created printing instruction to the instruction creation method of the printing service object as a return value of the method concerned.

Therefore, in the printing service class 104, the pointer to the instruction ID and the printing instruction can be associated, and it can hold as an attribute.

Moreover, the instruction creation method of the printing service object will pass the instruction ID which identifies the printing instruction to the printing instruction addition method of the printing service reception object as a return value of the method concerned, if the pointer to the printing instruction is acquired as a return value.

The printing instruction addition method of the printing service reception object passes the instruction ID acquired as a return value to the client software as a return value of the method concerned.

The printing instruction can be drawn up by performing processing as shown in FIG. 9.

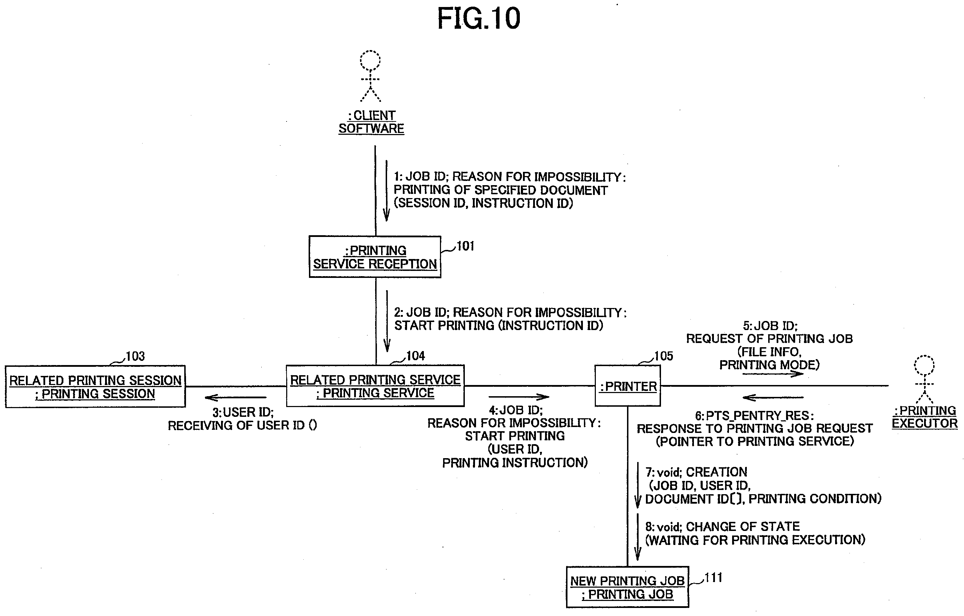

The interaction between the respective instances at the time of the entry of specified document printing will now be explained using FIG. 10.

FIG. 10 is a diagram for explaining an example of the interaction between the respective instances at the time of the entry of specified document printing.

In the sequence 1 of FIG. 10, the client software calls the specified document printing method of the printing service reception object for the session ID and the instruction ID as an argument.

In the sequence 2 of FIG. 10, the specified document printing method of the printing service reception object calls the printing start method of the printing service object corresponding to the session ID passed as an argument by making into the argument the instruction ID passed as an argument.

In addition, as mentioned above, the printing service reception class 101 associates the pointer to the printing session, the session ID of the printing session and the printing service which is the printing service object created by itself, and holds and manages the associate in the table as an attribute. Hence, it can determine the printing service corresponding to the session ID passed as an argument.

In the sequence 3 of FIG. 10, the printing start method of the printing service object calls the user ID acquisition method of the printing session object which set up the relation in the sequence 6 of FIG. 8.

The user ID acquisition method of the printing session object acquires the corresponding user ID currently held in the printing session class 103, and passes it to the printing start method of the printing service object as a return value.

In the sequence 4 of FIG. 10, the printing start method of the printing service object calls the printing start method of the instance (also called the printer object) of the printer class 105 for the user ID acquired in sequence 3, and the printing instruction corresponding to the instruction ID passed as an argument as an argument.

In addition, as mentioned above, since the printing service class 104 associates the pointer to the instruction ID and the printing instruction and holds it as an attribute, it can determine and acquire the printing instruction corresponding to the instruction ID passed as an argument.

In the sequence 5 of FIG. 10, the printing start method of the printer object transmits the printing job request to the printing executor by making into the argument the file information and printing mode which are contained in the printing instruction passed as an argument, and acquires the job ID which corresponds as a return value.

Moreover, in the sequence 6 of FIG. 10, the printing start method of the printer object acquires the printing job request response from the printing executor.

In the sequence 7 of FIG. 10, the printing start method of the printer object creates the printing job which is the instance (also called the printing job object) of the printing job class 111 considering the acquired job ID, the user ID passed as an argument, the document ID contained in the printing instruction passed as an argument, and the printing conditions as an argument.

Therefore, in the printer class 105, the job ID and the printing job which created can be associated, and it can hold and manage as an attribute.

In the sequence 8 of FIG. 10, the printing start method of the printer object calls the status-change method of the created printing job object by making the status information (which is, in the example of FIG. 10, set to the waiting for printing execution) concerning printing into the argument.

The status-change method of the printing job object changes the status information of the job based on the status information concerning printing passed as an argument.

In addition, the printing start method of the printer object passes the reason for impossibility to the printing start method of the printing service object as a return value of the method concerned, when the entry of the job ID, acquired from the printing executor in the sequence 5 of FIG. 10, and/or the printing job is not carried out effectively.

The printing start method of the printing service object passes the reason to the specified document printing method of the printing service reception object as a return value of the method concerned at the job ID acquired as a return value, and/or the time of impossibility.

The specified document printing method of the printing service reception object passes the reason to the client software as a return value of the method concerned at the job ID acquired as a return value, and/or the time of impossibility.

By performing processing as shown in FIG. 10, the entry of the printing of the document specified using the printing instruction can be carried out.

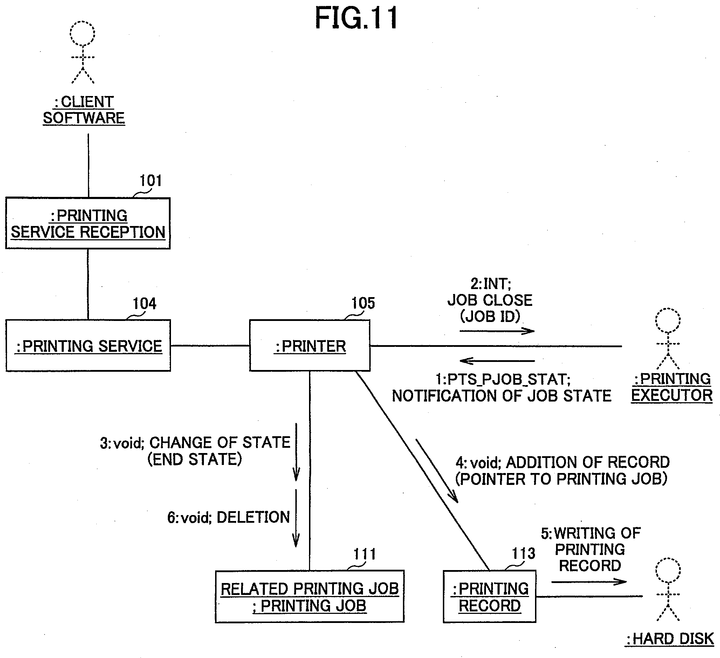

The interaction between the respective instances at the time of the job end of specified document printing will now be explained using FIG. 11.

FIG. 11 is a diagram for explaining an example of the interaction between the respective instances at the time of the job end of specified document printing.

In the sequence 1 of FIG. 11, the printing stop method of the printer object acquires the notification of the state of the job (which is, in the example of FIG. 11, the job-state notification indicating the end of the job) from the printing executor.

In the sequence 2 of FIG. 11, the printing stop method of the printer object transmits the closing request of the job to the printing executor by making into the argument the job ID acquired in the sequence 5 of FIG. 10.

In the sequence 3 of FIG. 11, the printing stop method of the printer object calls the status-change method of the printing job which is the printing job object created in the sequence 7 of FIG. 10 by making the status information (which is, in the example of FIG. 11, set to the end state) concerning printing into the argument.

In addition, the end state of the job may include the "normal termination", the "cancellation end by the user", etc.

The status-change method of the printing job object changes the status information of the job based on the status information concerning printing passed as an argument.

In the sequence 4 of FIG. 11, the printing stop method of the printer object calls the record addition method of the instance (also called the printing record object) of the printing record class 113 by making the pointer to the printing job into the argument.

In the sequence 5 of FIG. 11, the record addition method of the printing record object writes out the additional printing record information to the hard disk.

In the sequence 6 of FIG. 11, the printing stop method of the printer object deletes the printing job which is the printing job object created in the sequence 7 of FIG. 10.

By performing processing as shown in FIG. 11, the job of printing of the document specified using the printing instruction can be ended.

Next, a description will be given of the second preferred embodiment of the present invention.

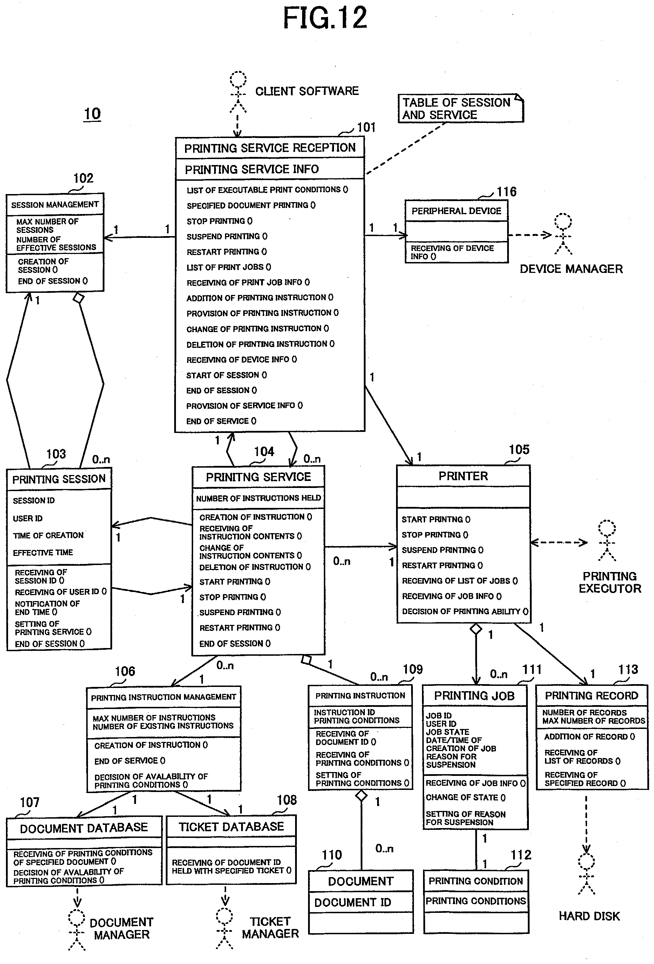

Another example of the relation between the classes in the printing service provision model of the present invention will be explained using FIG. 12.

FIG. 12 is a class diagram of another example of the printing service provision model of the present invention.

In the class diagram of FIG. 12, the peripheral device class 116 is added, and the printing service reception class 101 and the printer class 105 are associated with each other, when compared with the class diagram of FIG. 4.

The peripheral device class 116 is the class which provides the interface to the device manager which manages the peripheral device. In addition, the device manager may be the software which manages the peripheral device.

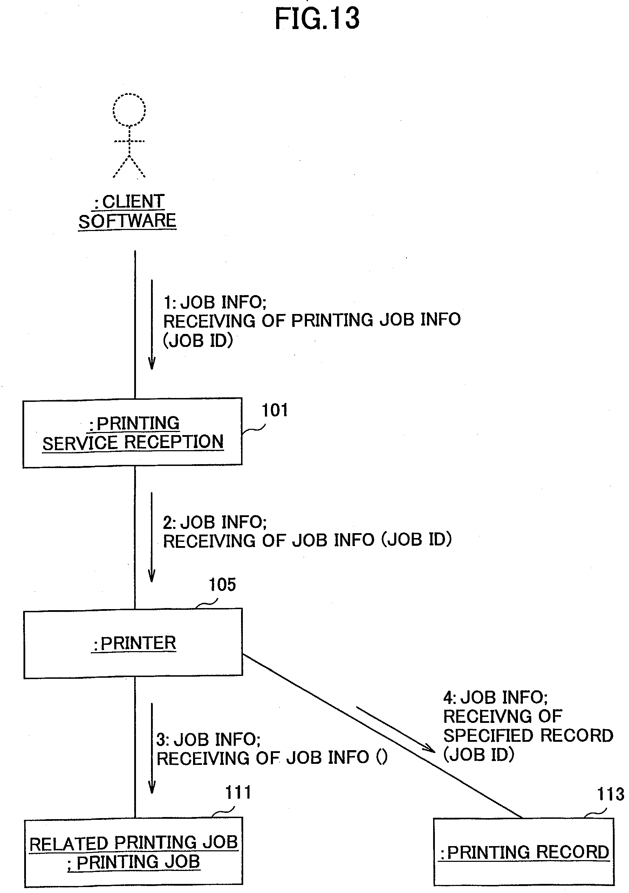

The interaction between the respective instances at the time of job information acquisition will now be explained using FIG. 13.

FIG. 13 is a diagram for explaining an example of the interaction between the respective instances at the time of job information acquisition.

In the sequence 1 of FIG. 13, the client software calls the acquisition method of the printing job information of the printing service reception object by making into the argument the job ID acquired as a return value in the sequence 1 of FIG. 10.

In the sequence 2 of FIG. 13, the acquisition method of the printing job information of the printing service reception object calls the job information acquisition method of the printer object by making into the argument the job ID passed as an argument.

In the sequence 3 of FIG. 13, the job information acquisition method of the printer object calls the job information acquisition method of the printing job which is the printing job object corresponding to the job ID passed as an argument, and acquires the job information as a return value.

In addition, the job information may include the user ID which identifies the user which performs the job, the job state which indicates the state of the job, the job date and time of creation of the job, and the reason for interruption of the job which is interrupted.

As described above, the printer class 105 associates the job ID and the created printing job, and holds and manages the association as an attribute. Hence, it can determine the printing job corresponding to the job ID passed as an argument.

Moreover, in the sequence 4 of FIG. 13, when the printing job which is the printing job object corresponding to the job ID passed as an argument does not exist, the job information acquisition method of the printer object calls the specified record acquisition method of the printing record object by making the job ID into the argument, and acquires the job information as a return value.

The job information acquisition method of the printer object passes the job information acquired in sequence 3 or sequence 4 to the acquisition method of the printing job information on the printing service reception object as a return value of the method concerned.

The acquisition method of the printing job information on the printing service reception object passes the job information acquired as a return value to the client software as a return value of the method concerned.

By performing processing as shown in FIG. 13, the client software can acquire the job information.

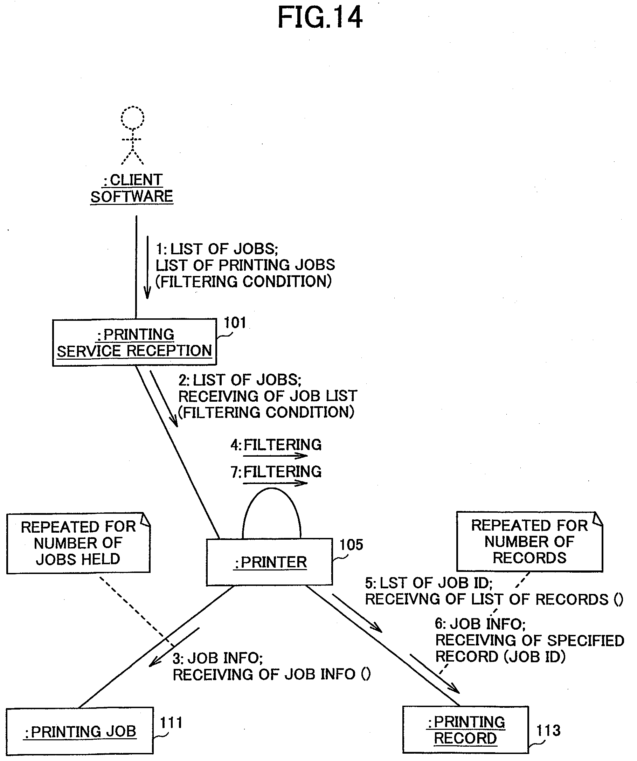

The interaction between the respective instances at the time of job list acquisition will now be explained using FIG. 14.

FIG. 14 is a diagram for explaining an example of the interaction between the respective instances the case of job list acquisition.

In the sequence 1 of FIG. 14, the client software calls the printing job list display method of the printing service reception object by making the filtering conditions over the printing job into the argument.

In addition, it is reasonable at the time of the user ID which identifies the user which performs the job as filtering conditions, and the discontinuation which interrupted the job state of expressing the state of the job, the job date and time of creation which created the job, and the job.

In the sequence 2 of FIG. 14, the printing job list display method of the printing service reception object calls the job list acquisition method of the printer object by making into the argument the filtering conditions passed as an argument.

In the sequence 3 of FIG. 14, the job list acquisition method of the printer object calls the job information acquisition method of the printing job which is the printing job object, and acquires job information as a return value.

In addition, the job list acquisition method of the printer object repeats processing of the sequence 3 of FIG. 14 for the number of the jobs held.

In the sequence 4 of FIG. 14, the job list acquisition method of the printer object performs the filtering of the job information acquired in the sequence 3 of FIG. 14 based on the filtering conditions passed as an argument.

If the job list acquisition method of the printer object judges with the job information in which the filtering conditions are filled existing as a result of filtering, it will be passed to the printing job list display method of the printing service reception object as a return value of the method concerned by considering the job information as the job list.

On the other hand, if the job list acquisition method of the printer object judges with the job information in which the filtering conditions are filled having not existed as a result of filtering, in the sequence 5 of FIG. 14, it will call the record list acquisition method of the printing record object, and will acquire the job ID list as a return value.

In the sequence 6 of FIG. 14, the job list acquisition method of the printer object calls the specification record acquisition method of the printing record object by making into the argument the job ID contained in the acquired job ID list, and acquires the job information as a return value.

In addition, the job list acquisition method of the printer object repeats processing of the sequence 6 of FIG. 14 for the number of the records held (for the number of the job IDs contained in the job ID list).

In the sequence 7 of FIG. 14, the job list acquisition method of the printer object filters to the job information acquired in the sequence 6 of FIG. 14 based on the filtering conditions passed as an argument.

If the job list acquisition method of the printer object judges with the job information in which the filtering conditions are filled existing as a result of filtering, it will be passed to the printing job list display method of the printing service reception object as a return value of the method concerned by considering the job information as the job list.

The printing job list display method of the printing service reception object passes the job list acquired as a return value to the client software as a return value of the method concerned.

By performing processing as shown in FIG. 14, the client software can acquire the list of job information which satisfies the filtering conditions.

Next, a description will be given of another example of the printing service provision model of the invention which is provided in the third preferred embodiment as a service provision model.

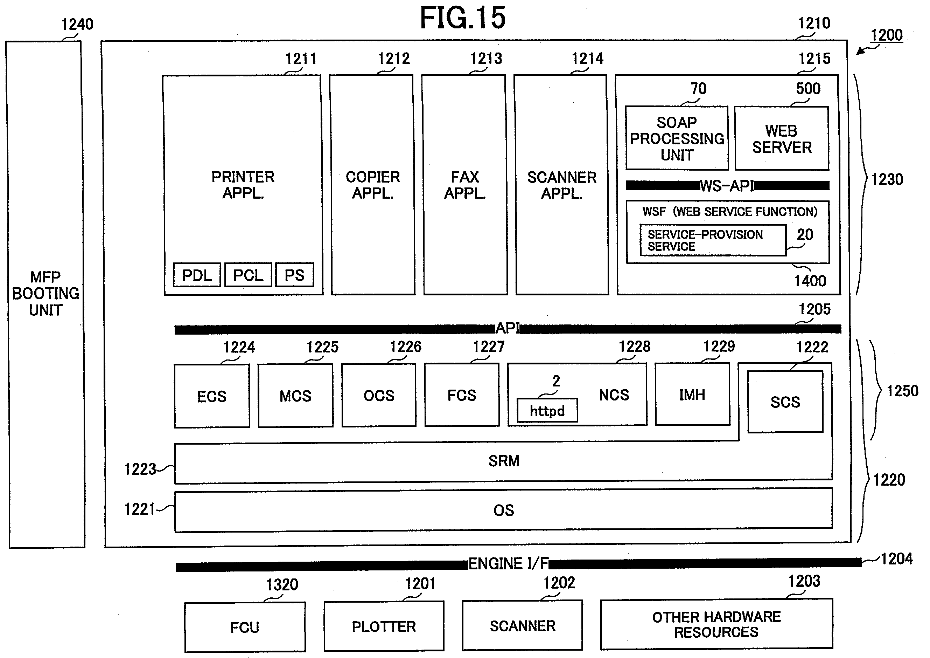

FIG. 15 is a block diagram showing the functional composition of the multi-function peripheral system in the present embodiment.

When compared with the multi-function peripheral system 1200 in FIG. 1, the multi-function peripheral system 1200 in FIG. 15 is provided with the service provision service 20 which included in the Web service function 1400, instead of the printing service provision service 10 provided in the former.

The service provision service 20 is the service provision service which provides the user with the service which includes the printing service (printer service) as in the first and second preferred embodiments, the copy service, the fax service, the scanner service, etc.

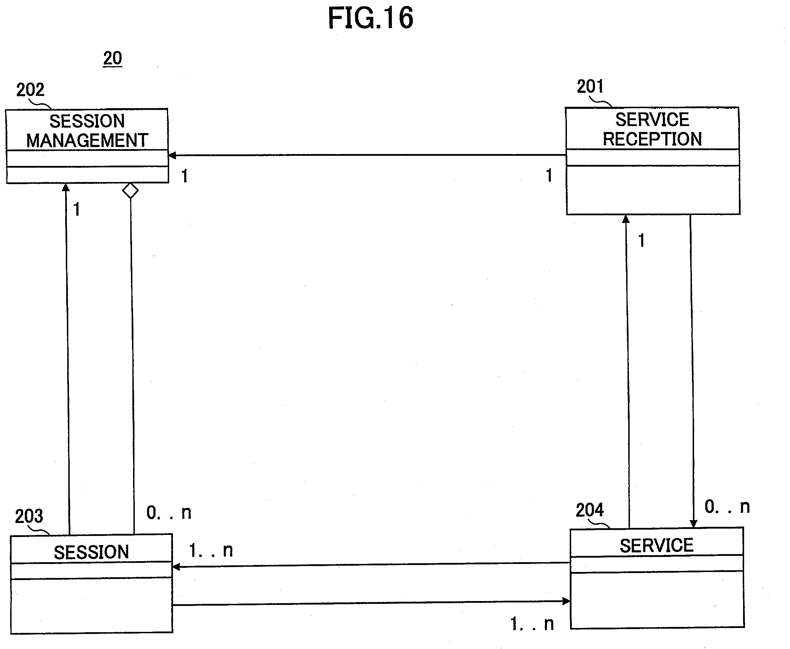

An example of the association between the classes in the service provision model of the present invention will now be explained using FIG. 16.

FIG. 16 is a class diagram of an example of the service provision model of the present invention.

As shown in FIG. 16, the service provision model of the present embodiment comprises the service reception class 201, the session-management class 202, the session class 203, and the class of service 204.

The service reception class 201 is the class which receives the request from the client software installed in the client PC, etc.

The session-management class 202 is the class which manages the session between the client software and the service provision service 20.

The session class 203 is the class which provides the session between the client software and the service provision service 20.

The service class 204 is the class which provides the service while the session which corresponds to the session provided by the session class 203 is effective.

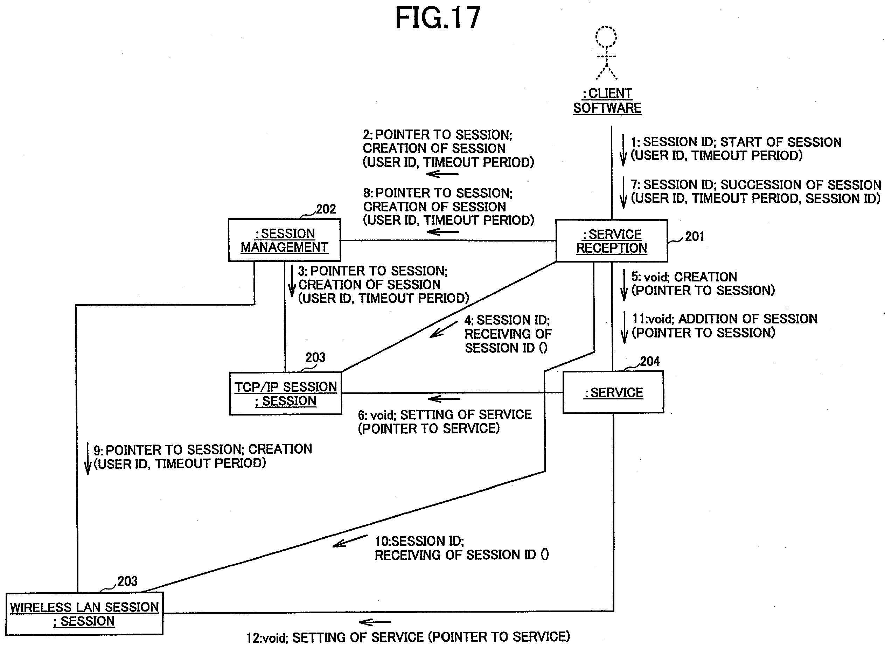

The interaction between the instances of the respective classes at the time of the start and succession of the session when there are two or more sessions in association with one service will now be explained using FIG. 17.

FIG. 17 is a diagram for explaining an example of the interaction between the respective instances at the time of the session start and succession when there are two or more sessions in association with one service.

In the sequence 1 of FIG. 17, the client software calls the session start method of the instance (also called the service reception object) of the service reception class 201 by making the user ID which identifies the user, and the time-out period of the session as an argument.

In the sequence 2 of FIG. 17, the session start method of the service reception object calls the session creation method of the instance (also called the session-management object) of the session-management class 202 by making the user ID passed as an argument, and the time-out period as an argument.

In the sequence 3 of FIG. 17, the session creation method of the session-management object creates the session (TCP/IP session) which is the instance (also called the session object) of the session class 203 by making the user ID passed as an argument, and the time-out period as an argument, and acquires the pointer to the TCP/IP session as a return value.

The session creation method of the session-management object passes the pointer to the TCP/IP session to the session start method of the service reception object as a return value of the method concerned.

In addition, the TCP/IP session represents the session of the service provision service 20 and the client software, and exists effectively during the time-out period passed as an argument.

Moreover, the session class 203 holds as an attribute the user ID, the time-out period, etc. passed as an argument.

In the sequence 4 of FIG. 17, the session start method of the service reception object calls the session ID acquisition method of the session object created in the sequence 3 of FIG. 17, and acquires the session ID which identifies the TCP/IP session which is the session object as a return value.

Therefore, in the service reception class 201, the pointer to the TCP/IP session and the session ID of the TCP/IP session can be associated with each other, and the association can be held and managed in the table etc. as an attribute.

In the sequence 5 of FIG. 17, the session start method of the service reception object creates the service which is the instance (also called the service object) of the service class 204 by making the pointer to the TCP/IP session into the argument.

Therefore, in the service reception class 201, the pointer to the TCP/IP session, the session ID of the TCP/IP session and the service which is the service object created by itself can be associated with each other, and the association can be held and managed in the table etc. as an attribute.

In the sequence 6 of FIG. 17, the service which is the service object calls the service setting method of the session object created in the sequence 3 of FIG. 17 by making the pointer to the service concerned into the argument.

Therefore, the TCP/IP session which is created on the occasion of the session start, and the service are associated with each other.

In addition, the session start method of the service reception object passes the session ID acquired in the sequence 4 of FIG. 17 to the client software as a return value of the method concerned.

Moreover, in the sequence 7 of FIG. 17, the client software calls the session succession method of the service reception object by making the user ID which identifies the user, the time-out period of the session, and the session ID of the succession session as an argument.

In the sequence 8 of FIG. 17, the session succession method of the service reception object calls the session creation method of the session-management object by making the user ID passed as an argument, and the time-out period as an argument.

In the sequence 9 of FIG. 17, the session creation method of the session-management object creates the session (wireless LAN session) which is the session object, by making the user ID passed as an argument, and the time-out period as an argument, and acquires the pointer to the wireless LAN session as a return value.

The session creation method of the session-management object passes the pointer to the wireless LAN session to the session succession method of the service reception object as a return value of the method concerned.

In addition, the wireless LAN session represents the session of the service provision service 20 and the client software, and exists effectively during the time-out period passed as an argument.

Moreover, the session class 203 holds as an attribute the user ID, the time-out period, etc. passed as an argument.

In the sequence 10 of FIG. 17, the session succession method of the service reception object calls the session ID acquisition method of the session object created in the sequence 9 of FIG. 17, and acquires the session ID which identifies the wireless LAN session which is the session object as a return value.

Therefore, in the service reception class 201, the pointer to the wireless LAN session and the session ID of the wireless LAN session can be associated with each other, and the association can be held and managed in the table etc. as an attribute.

In the sequence 12 of FIG. 17, the service which is the service object calls the service setting method of the session object which it created in the sequence 7 of FIG. 17 by making the pointer to the service concerned into the argument.

Therefore, the wireless LAN session which is created on the occasion of session succession, and the service are associated with each other.

In addition, the session succession method of the service reception object passes the session ID acquired in the sequence 10 of FIG. 17 to the client software as a return value of the method concerned.

By performing processing as shown in FIG. 17, the start of the session when there are two or more sessions in association with one service, and the succession of the session can be performed.

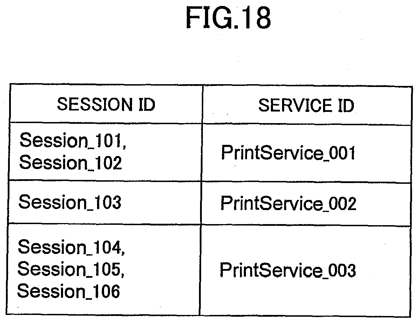

An example of the table which is set in the service reception class 201 and associates the session held and managed and the service will now be explaining using FIG. 18.

FIG. 18 is a diagram showing an example of the table which associates the session and the service.

As shown in FIG. 18, the table contains the session identifier and the service identifier as the table items.

The service reception class 201 holds and manages the table as shown in FIG. 18, and associates the session and the service. In addition, the identifier may be the pointer or the ID.

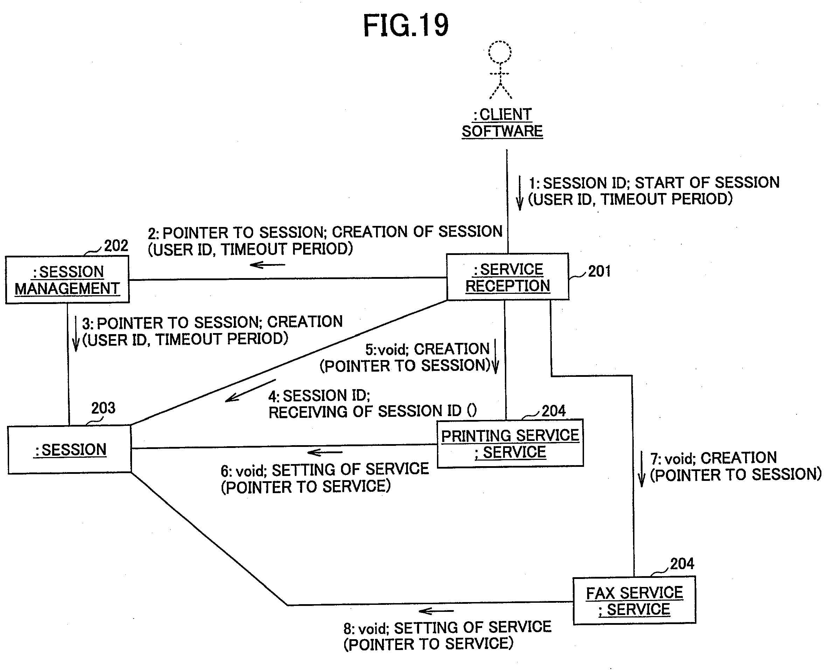

The interaction between the instances of the respective classes at the time of the start of the session when there are two or more services in association with one session will now be explained using FIG. 19.

FIG. 19 is a diagram for explaining an example of the interaction between the respective instances at the time of the session start when there are two or more services in association with one session.

In the sequence 1 of FIG. 19, the client software calls the session start method of the service reception object by making the user ID which identifies the user, and the time-out period of the session as an argument.

In the sequence 2 of FIG. 19, the session start method of the service reception object calls the session creation method of the session-management object by making the user ID passed as an argument, and the time-out period as an argument.

In the sequence 3 of FIG. 19, the session creation method of the session-management object creates the session which is the session object, by making the user ID passed as an argument, and the time-out period as an argument, and acquires the pointer to the session as a return value.

The session creation method of the session-management object passes the pointer to the session to the session start method of the service reception object as a return value of the method concerned.

In addition, the session represents the session of the service provision service 20 and the client software, and exists effectively during the time-out period passed as an argument.

Moreover, the session class 203 holds as an attribute the user ID, the time-out period, etc. passed as an argument.

In the sequence 4 of FIG. 19, the session start method of the service reception object calls the session ID acquisition method of the session object created in the sequence 3 of FIG. 19, and acquires the session ID which identifies the session which is the session object as a return value.

Therefore, in the service reception class 201, the pointer to the session and the session ID of the session can be associated with each other, and the association can be held and managed in the table etc. as an attribute.

In the sequence 5 of FIG. 19, the session start method of the service reception object creates the service (the printing service which provides the printing-related service) which is the service object by making the pointer to the session into the argument.

Therefore, in the service reception class 201, the pointer to the session, the session ID of the session, and the printing service which is the service object created by itself can be associated with each other, and the association can be held and managed in the table etc. as an attribute.

In the sequence 6 of FIG. 19, the printing service which is the service object calls the service setting method of the session object created in the sequence 3 of FIG. 19 by making the pointer to the printing service concerned into the argument.

Therefore, the session which is created on the occasion of the session start, and the printing service are associated with each other.

Moreover, in the sequence 7 of FIG. 19, the session start method of the service reception object creates the service (the fax service which provides the fax-related service) which is the service object by making the pointer to the session into the argument.

Therefore, in the service reception class 201, the pointer to the session, and the session ID of the session and the fax service which is the service object created in person can be associated, and it can set and hold and manage on the table etc. as an attribute.

In the sequence 8 of FIG. 19, the fax service which is the service object calls the service setting method of the session object created in the sequence 3 of FIG. 19 by making the pointer to the fax service concerned into the argument.

Therefore, the session which it created on the occasion of the session start, and fax service are associated.

In addition, the session start method of the service reception object passes the session ID acquired in the sequence 4 of FIG. 19 to the client software as a return value of the method concerned.

By performing processing as shown in FIG. 19, the session when there are two or more services in association with the one session can be started.

In addition, although the service (printing service and fax service) which can be offered were created at once according to the request from the client software, it is possible to make it create the service (for example, only printing service) which can be offered in the service reception class 201 in the example of FIG. 19 according to the user.

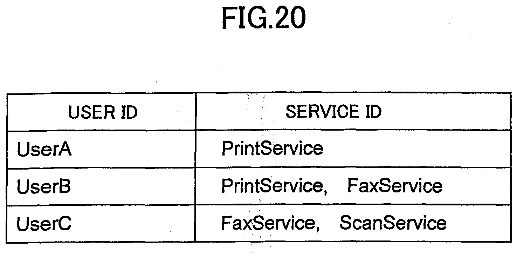

When the service reception class 201 creates the available service according to the user, the service reception class 201 needs to hold the service with which the user and the user can be provided, and the information concerning the correspondence of the table items. An example of the table will be described later using FIG. 20.

Moreover, the service reception class 201 may be made to perform processing of the sequence 5 of FIG. 19, processing of the sequence 7 of FIG. 19, etc., when it is to the sequence 4 of FIG. 19, processing is stopped, without creating at once the available service and the access request in the service from the client software etc. is actually.

An example of the table which is set in the service reception class 201 and associates the user held and managed and the available service will be explained using FIG. 20.

FIG. 20 is a diagram showing an example of the table which associates the user and the available service.

As shown in FIG. 20, the table contains the user-identifier and the service identifier as the table items.

The service reception class 201 holds and manages the table as shown in FIG. 20, and associates the user and the service which can be provided to the user.

In addition, the service identifier may be the pointer to service or the service ID. Moreover, the user identification may be the user name or the user ID.

As mentioned above, according to the present invention, the service which corresponds to the user is created, and if the user using the service is the same while the session is effective, the service can be provided under the same conditions by using the previously used instruction.

For example, according to the present invention, it possible to perform the printing of a document which is accumulated in the multi-function peripheral system 1200, under the printing conditions which are the same as the previous ones, using the previously used printing instruction, if the user using the printing service is the same while the session is effective. It is also possible to perform the printing by modifying slightly the printing conditions described in the previously used printing instruction.

As mentioned above, according to the present invention, it is possible to efficiently provide the client, which is connected through the network to the service provision unit, with the service (for example, the printing service).

In the above-mentioned embodiments, the printing service is mainly discussed, and the printing instruction is provided as an instruction. When the service concerned is the copying service, the instruction is changed to the copying instruction containing the copying conditions etc. When the service concerned is the fax service, the instruction is changed to the fax instruction containing the fax conditions etc. When the service concerned is the scanner service, the instruction is changed to the scanner instruction containing the scanner conditions etc.

The present invention is not limited to the above-described embodiments, and variations and modifications may be made without departing from the present invention as claimed.

## Claims

1. A service provision device having a service provision unit configured to provide a client with a plurality of services, comprising:
a receiving unit (11, 101, 201) adapted to receive a printing job request from a client which is connected through a network to the service provision unit, and upon reception of the printing job request from the client, the receiving unit receiving an identifier of the client and a time-out period for a session;
a service unit (12, 104, 204) adapted to provide a plurality of services to the client in response to receiving the printing job request from the receiving unit;
an instruction unit (17, 109) adapted to provide a printing instruction, containing image processing-related attribute information concerning the contents of printing, the instruction associated with and arranged to be created in response to the printing job request from the client;
a job execution unit (13, 105) adapted to provide an interface to a service executor adapted to perform the printing service-related processing, and adapted to perform a job related to the printing service-related processing; and
a session unit (14, 103, 203) adapted to provide a session between the service provision unit and the client,
wherein:
the receiving unit is adapted to create two or more services available for the client among the plurality of services provided by the service unit, based on the client identifier, the session time-out period and the image processing request received from the client, and adapted to associate an identifier of the time out period of the session, the 1137368-1-STAOR
client identifier, and two or more service identifiers of the services available for the client, in a table, and
the instruction associated with the client and adapted to provide a printing-related service remains the same while the session is effective.

2. A service provision device according to claim 1, **characterised in that** the plurality of services provided by the service unit (12, 104) are created in response to a session start request received from the client.

3. A service provision device according to claim 1 or 2, **characterised in** further comprising a session management unit (15, 102) adapted to manage the session of the service provision unit and the client.

4. A service provision device according to any of claims 1 to 3, **characterised by** an instruction management unit (18, 106) adapted to create the instruction with respect to the contents of the processing related to the service.

5. A service provision device according to any of claims 1 to 4, **characterised in that** the service unit (12, 104) is adapted to allocate uniquely an instruction identifier which identifies the instruction.

6. A service provision device according to any of claims 1 to 5, **characterised in** further comprising a document database unit (16, 107) providing an interface to a document manager which manages a document.

7. A service provision device according to any of claims 1 to 6, **characterised in** further comprising a record unit (19, 113) providing an interface to a record accumulation unit which accumulates records concerning the processing.

8. A service provision device according to any of claims 1 to 7, **characterised in that** the receiving unit (11, 101), the service unit (12, 104), the instruction unit (17, 109) and the job execution unit (13, 105) are implemented using classes of an object-oriented programming.

9. A service provision method for use in a service provision device having a service provision unit which provides a client with a plurality of services, the service provision method comprising:
receiving a printing job request from a client which is connected through a network to a service provision unit, and upon reception of the printing job request from the client, receiving an identifier of the client and a time-out period for a session;
providing a plurality of services to the client in response to receiving the printing job request;
providing a printing instruction, containing image-processing-related attribute information concerning the contents of printing, the instruction associated with and created in response to the printing job request from the client;
providing an interface to a service executor which performs the printing service-related processing;
performing a job related to the printing service-related processing; and
providing a session between the service provision unit and the client;
comprising creating two or more services available for the client among the plurality of services provided, based on the client identifier, the session time-out period and the image processing request received from the client, associating an identifier of the time out period of the session, the client identifier, and two or more service identifiers of the services available for the client in a table;
wherein the instruction associated with the client and adapted to provide a printing-related service remains the same while the session is effective.

10. A service provision method according to claim 9, **characterised in** further comprising acquiring job information concerning the job in response to a request received from the client.

11. A service provision method according to claim 9 or 10, **characterised in** further comprising acquiring a list of job information concerning the job, which meets predetermined filtering conditions concerning the job, in response to a request received from the client.

12. A computer program product for causing a computer to execute a service provision method according to any one of claims 9 to 11.

13. A computer program product according to claim 12, **characterised in that** the plurality of services are created in response to a session start request received from the client.

14. A computer program product according to claim 12 or 13, **characterised in that** the service provision method further comprises managing the session of the service provision unit and the client.

15. A computer program product according to any of claims 12 to 14, **characterised in that** an association which associates a session identifier which identifies the session, with the service unit is provided in the service provision device.

16. A computer program product according to any of claims 12 to 15, **characterised in that** the instruction is created with respect to the contents of the processing related to the service.

17. A computer program product according to any of claims 12 to 16, **characterised in that** an instruction identifier which identifies the instruction is allocated uniquely.

18. A computer program product according to any of claims 12 to 17, **characterised in that** the service provision method further comprises providing an interface to a document manager which manages a document.

19. A computer program product according to any of claims 12 to 18, **characterised in that** the service provision method further comprises providing an interface to a record accumulation unit which accumulates records concerning the processing.

20. A computer program product according to any of claims 12 to 18, **characterised in that** respective steps of the service provision method are implemented using classes of an object-oriented programming.

21. A computer-readable recording medium for causing a computer to execute a service provision method according to any of claims 9 to 11.

## Patentansprüche

1. Leistungsbereitstellungsvorrichtung mit einer Leistungsbereitstellungseinheit, die dafür ausgelegt ist, einer Clientvorrichtung mehrere Leistungen bereitzustellen, umfassend:
eine Empfangseinheit (11, 101, 201), die dafür ausgelegt ist, von einer Clientvorrichtung, die über ein Netz mit der Leistungsbereitstellungseinheit verbunden ist, eine Druckauftragsanfrage zu empfangen, und wobei die Empfangseinheit nach dem Empfang der Druckauftragsanfrage der Clientvorrichtung eine Kennung der Clientvorrichtung und eine Zeitbeschränkung für eine Sitzung empfängt;
eine Leistungseinheit (12, 104, 204), die dafür ausgelegt ist, der Clientvorrichtung als Reaktion auf den Empfang der Druckauftragsanfrage von der Empfangseinheit mehrere Leistungen bereitzustellen;
eine Anweisungseinheit (17, 109), die dafür ausgelegt ist, eine Druckanweisung auszugeben, die auf eine Bildverarbeitung bezogene Attributinformationen enthält, die den Druckinhalt betreffen, wobei die Anweisung mit der Druckauftragsanfrage der Clientvorrichtung assoziiert und so eingerichtet ist, dass sie als Reaktion auf diese erzeugt wird;
eine Auftragsausführungseinheit (13, 105), die dafür ausgelegt ist, für einen Leistungsausführer, der dafür ausgelegt ist, die auf den Druckauftrag bezogene Verarbeitung durchzuführen, eine Schnittstelle bereitzustellen, und die dafür ausgelegt ist, einen Auftrag durchzuführen, der mit der auf die Druckleistung bezogenen Verarbeitung in Beziehung steht; und
eine Sitzungseinheit (14, 103, 203), die dafür ausgelegt ist, eine Sitzung zwischen der Leistungsbereitstellungseinheit und der Clientvorrichtung bereitzustellen,
wobei:
die Empfangseinheit dafür ausgelegt ist, auf Basis der Clientvorrichtungskennung, der Zeitbeschränkung für eine Sitzung und der von der Clientvorrichtung empfangenen Bildverarbeitungsanfrage aus den mehreren Leistungen, die von der Leistungseinheit bereitgestellt werden, zwei oder mehr Leistungen zu erzeugen, die für die Clientvorrichtung zur Verfügung stehen, und die dafür ausgelegt ist, eine Kennung der Zeitbeschränkung für die Sitzung, die Clientvorrichtungskennung und zwei oder mehr Leistungskennungen der für die Clientvorrichtung zur Verfügung stehenden Leistungen in einer Tabelle zu assoziieren, und
die Anweisung, die mit der Clientvorrichtung assoziiert ist und die dafür ausgelegt ist, eine auf Drucken bezogene Leistung bereitzustellen, gleich bleibt, während die Sitzung aktiv ist.

2. Leistungsbereitstellungsvorrichtung nach Anspruch 1, **dadurch gekennzeichnet, dass** die mehreren Leistungen, die von der Leistungseinheit (12, 104) bereitgestellt werden, als Reaktion auf eine von der Clientvorrichtung empfangene Sitzungsstartanfrage erzeugt werden.

3. Leistungsbereitstellungsvorrichtung nach Anspruch 1 oder 2, **dadurch gekennzeichnet, dass** sie ferner eine Sitzungsverwaltungseinheit (15, 102) umfasst, die dafür ausgelegt ist, die Sitzung der Leistungsbereitstellungseinheit und der Clientvorrichtung zu verwalten.

4. Leistungsbereitstellungsvorrichtung nach einem der Ansprüche 1 bis 3, **gekennzeichnet durch** eine Anweisungsverwaltungseinheit (18, 106), die dafür ausgelegt ist, die Anweisung im Hinblick auf den Inhalt der mit der Leistung in Bezug stehenden Verarbeitung zu erzeugen.

5. Leistungsbereitstellungsvorrichtung nach einem der Ansprüche 1 bis 4, **dadurch gekennzeichnet, dass** die Leistungseinheit (12, 104) dafür ausgelegt ist, eine Anweisungskennung, welche die Anweisung identifiziert, eindeutig zuzuweisen.

6. Leistungsbereitstellungsvorrichtung nach einem der Ansprüche 1 bis 5, **dadurch gekennzeichnet, dass** sie ferner eine Dokumentendatenbankeinheit (16, 107) umfasst, die eine Schnittstelle für einen Dokumentenverwalter, der ein Dokument verwaltet, bereitstellt.

7. Leistungsbereitstellungsvorrichtung nach einem der Ansprüche 1 bis 6, **dadurch gekennzeichnet, dass** sie ferner eine Aufzeichnungseinheit (19, 113) umfasst, die eine Schnittstelle für eine Aufzeichnungssammlungseinheit bereitstellt, die Aufzeichnungen sammelt, welche die Verarbeitung betreffen.

8. Leistungsbereitstellungsvorrichtung nach einem der Ansprüche 1 bis 7, **dadurch gekennzeichnet, dass** die Empfangseinheit (11, 101), die Leistungseinheit (12, 104), die Anweisungseinheit (17,109) und die Auftragsausführungseinheit (13, 105) unter Verwendung von Klassen einer objektorientierten Programmierung implementiert werden.

9. Leistungsbereitstellungsverfahren zur Verwendung in einer Leistungsbereitstellungsvorrichtung mit einer Leistungsbereitstellungseinheit, die für eine Clientvorrichtung mehrere Leistungen bereitstellt, wobei das Leistungsbereitstellungsverfahren umfasst:
Empfangen einer Druckauftragsanfrage von einer Clientvorrichtung, die über ein Netz mit einer Leistungsbereitstellungseinheit verbunden ist, und Empfangen einer Kennung der Clientvorrichtung und einer Zeitbeschränkung für eine Sitzung nach dem Empfangen der Druckauftragsanfrage der Clientvorrichtung;
Bereitstellen mehrerer Leistungen für die Clientvorrichtung als Reaktion auf den Empfang der Druckauftragsanfrage;
Ausgeben einer Druckanweisung, die auf eine Bildverarbeitung bezogene Attributinformationen enthält, die den Druckauftrag betreffen, wobei die Anweisung mit der Druckauftragsanfrage der Clientvorrichtung assoziiert wird und als Reaktion auf diese erzeugt wird;
Bereitstellen einer Schnittstelle für einen Leistungsausführer, der die auf die Druckleistungserbringung bezogene Verarbeitung durchführt;
Durchführen eines Auftrags in Bezug auf die auf die Druckleistungserbringung bezogene Verarbeitung; und
Bereitstellen einer Sitzung zwischen der Leistungserbringungseinheit und der Clientvorrichtung;
umfassend: Erzeugen von zwei oder mehr Leistungen, die für die Clientvorrichtung zur Verfügung stehen, aus den mehreren bereitgestellten Leistungen auf Basis der Clientvorrichtungskennung, der Zeitbeschränkung für die Sitzung und der von der Clientvorrichtung empfangenen Bildverarbeitungsanfrage , Assoziieren einer Kennung der Zeitbeschränkung für die Sitzung, der Clientvorrichtungskennung und zweier oder mehrerer Leistungskennungen der für die Clientvorrichtung zur Verfügung stehenden Leistungen in einer Tabelle;
wobei die Anweisung, die mit der Clientvorrichtung assoziiert ist und die dafür ausgelegt ist, eine auf Drucken bezogene Leistung bereitzustellen, gleich bleibt, während die Sitzung aktiv ist.

10. Leistungsbereitstellungsverfahren nach Anspruch 9, **dadurch gekennzeichnet, dass** es ferner das Abfragen von Auftragsinformationen, die den Auftrag betreffen, als Reaktion auf eine von der Clientvorrichtung empfangene Anfrage umfasst.

11. Leistungsbereitstellungsverfahren nach Anspruch 9 oder 10, **dadurch gekennzeichnet, dass** es ferner das Abfragen einer Liste von den Auftrag betreffenden Auftragsinformationen, die vorgegebene Filterbedingungen in Bezug auf den Auftrag erfüllen, als Reaktion auf eine von der Clientvorrichtung empfangene Anfrage umfasst.

12. Computerprogrammprodukt, das bewirkt, dass ein Computer ein Leistungsbereitstellungsverfahren nach einem der Ansprüche 9 bis 11 ausführt.

13. Computerprogrammprodukt nach Anspruch 12, **dadurch gekennzeichnet, dass** die mehreren Leistungen als Reaktion auf eine von der Clientvorrichtung empfangene Sitzungsstartanfrage erzeugt werden.

14. Computerprogrammprodukt nach Anspruch 12 oder 13, **dadurch gekennzeichnet, dass** das Leistungsbereitstellungsverfahren ferner das Verwalten der Sitzung der Leistungsbereitstellungseinheit und der Clientvorrichtung umfasst.

15. Computerprogrammprodukt nach einem der Ansprüche 12 bis 14, **dadurch gekennzeichnet, dass** eine Assoziation, die eine Sitzungskennung, welche die Sitzung identifiziert, mit der Leistungseinheit assoziiert, in der Leistungsbereitstellungsvorrichtung vorgesehen ist.

16. Computerprogrammprodukt nach einem der Ansprüche 12 bis 15, **dadurch gekennzeichnet, dass** die Anweisung im Hinblick auf den Inhalt der mit der Leistung in Bezug stehenden Verarbeitung erzeugt wird.

17. Computerprogrammprodukt nach einem der Ansprüche 12 bis 16, **dadurch gekennzeichnet, dass** eine Anweisungskennung, welche die Anweisung identifiziert, eindeutig zugewiesen wird.

18. Computerprogrammprodukt nach einem der Ansprüche 12 bis 17, **dadurch gekennzeichnet, dass** das Leistungsbereitstellungsverfahren ferner die Bereitstellung einer Schnittstelle für einen Dokumentenverwalter, der ein Dokument verwaltet, umfasst.

19. Computerprogrammprodukt nach einem der Ansprüche 12 bis 18, **dadurch gekennzeichnet, dass** das Leistungsbereitstellungsverfahren ferner das Bereitstellen einer Schnittstelle für eine Aufzeichnungssammlungseinheit umfasst, die Aufzeichnungen sammelt, welche die Verarbeitung betreffen.

20. Computerprogrammprodukt nach einem der Ansprüche 12 bis 18, **dadurch gekennzeichnet, dass** jeweilige Schritte des Leistungsbereitstellungsverfahrens unter Verwendung von Klassen einer objektorientierten Programmierung implementiert werden.

21. Computerlesbares Aufzeichnungsmedium, mit dem bewirkt werden kann, dass ein Computer ein Leistungsbereitstellungsverfahren nach einem der Ansprüche 9 bis 11 ausführt.

## Revendications

1. Dispositif de mise à disposition de services présentant une unité de mise à disposition de services configurée de manière à fournir, à un dispositif client, une pluralité de services, comprenant :
une unité de réception (11, 101, 201) apte à recevoir une demande de tâche d'impression en provenance d'un dispositif client qui est connecté, à travers un réseau, à l'unité de mise à disposition de services, et dans lequel, suite à la réception de la demande de tâche d'impression en provenance du dispositif client, l'unité de réception reçoit un identifiant du dispositif client et une période de fin de temporisation pour une session ;
une unité de service (12, 104, 204) apte à fournir une pluralité de services au dispositif client en réponse à la réception de la demande de tâche d'impression à partir de l'unité de réception ;
une unité d'instruction (17, 109) apte à fournir une instruction d'impression, contenant des informations d'attributs connexes au traitement d'image concernant les contenus d'impression, l'instruction étant associée à, et étant agencée de manière à être créée en réponse à, la demande de tâche d'impression en provenance du dispositif client ;
une unité d'exécution de tâche (13, 105) apte à fournir une interface à un module d'exécution de service apte à mettre en oeuvre le traitement connexe au service d'impression, et apte à mettre en oeuvre une tâche associée au traitement connexe au service d'impression ; et
une unité de session (14, 103, 203) apte à fournir une session entre l'unité de mise à disposition de services et le dispositif client ;
dans lequel :
l'unité de réception est apte à créer deux services ou plus, disponibles pour le dispositif client, parmi la pluralité de services fournie par l'unité de service, sur la base de l'identifiant de dispositif client, de la période de fin de temporisation de session et de la demande de traitement d'image reçue à partir du dispositif client, et apte à associer un identifiant de la période de fin de temporisation de la session, l'identifiant de dispositif client et deux identifiants de services ou plus des services disponibles pour le dispositif client, dans une table ; et
l'instruction associée au dispositif client et apte à fournir un service connexe à l'impression reste la même tandis que la session est en cours.

2. Dispositif de mise à disposition de services selon la revendication 1, **caractérisé en ce que** la pluralité de services fournie par l'unité de service (12, 104) est créée en réponse à une demande de démarrage de session reçue à partir du dispositif client.

3. Dispositif de mise à disposition de services selon la revendication 1 ou 2, **caractérisé en ce qu'**il comporte en outre une unité de gestion de session (15, 102) apte à gérer la session de l'unité de mise à disposition de services et le dispositif client.

4. Dispositif de mise à disposition de services selon l'une quelconque des revendications 1 à 3, **caractérisé par** une unité de gestion d'instructions (18, 106) apte à créer l'instruction relativement aux contenus du traitement connexe au service.

5. Dispositif de mise à disposition de services selon l'une quelconque des revendications 1 à 4, **caractérisé en ce que** l'unité de service (12, 104) est apte à affecter de manière unique un identifiant d'instruction qui identifie l'instruction.

6. Dispositif de mise à disposition de services selon l'une quelconque des revendications 1 à 5, **caractérisé en ce qu'**il comporte en outre une unité de base de données de documents (16, 107) fournissant une interface à un gestionnaire de documents qui gère un document.

7. Dispositif de mise à disposition de services selon l'une quelconque des revendications 1 à 6, **caractérisé en outre en ce qu'**il comporte une unité d'enregistrements (19, 113) fournissant une interface à une unité d'accumulation d'enregistrements qui accumule des enregistrements concernant le traitement.

8. Dispositif de mise à disposition de services selon l'une quelconque des revendications 1 à 7, **caractérisé en ce que** l'unité de réception (11, 101), l'unité de service (12, 104), l'unité d'instruction (17, 109) et l'unité d'exécution de tâche (13, 105) sont mises en oeuvre en utilisant des classes d'une programmation orientée objet.

9. Procédé de mise à disposition de services destiné à être utilisé dans un dispositif de mise à disposition de services présentant une unité de mise à disposition de services qui fournit, à un dispositif client, une pluralité de services, le procédé de mise à disposition de services comprenant les étapes ci-dessous consistant à :
recevoir une demande de tâche d'impression en provenance d'un dispositif client qui est connecté, à travers un réseau, à une unité de mise à disposition de services, et, suite à la réception de la demande de tâche d'impression en provenance du dispositif client, recevoir un identifiant du dispositif client et une période de fin de temporisation pour une session ;
fournir une pluralité de services au dispositif client en réponse à la réception de la demande de tâche d'impression ;
fournir une instruction d'impression, contenant des informations d'attributs connexes au traitement d'image concernant les contenus d'impression, l'instruction étant associée à, et étant créée en réponse à, la demande de tâche d'impression en provenance du dispositif client ;
fournir une interface à un module d'exécution de service qui met en oeuvre le traitement connexe au service d'impression ;
mettre en oeuvre une tâche associée au traitement connexe au service d'impression ; et
fournir une session entre l'unité de mise à disposition de services et le dispositif client ;
comportant l'étape consistant à créer deux services ou plus, disponibles pour le dispositif client, parmi la pluralité de services fournie, sur la base de l'identifiant de dispositif client, de la période de fin de temporisation de session et de la demande de traitement d'image reçue à partir du dispositif client, et l'étape consistant à associer un identifiant de la période de fin de temporisation de la session, l'identifiant de dispositif client et deux identifiants de services ou plus des services disponibles pour le dispositif client, dans une table ; et
dans lequel l'instruction associée au dispositif client et apte à fournir un service connexe à l'impression reste la même tandis que la session est en cours.

10. Procédé de mise à disposition de services selon la revendication 9, **caractérisé en ce qu'**il comporte en outre l'étape consistant à acquérir des informations de tâche concernant la tâche, en réponse à une demande reçue à partir du dispositif client.

11. Procédé de mise à disposition de services selon la revendication 9 ou 10, **caractérisé en ce qu'**il comporte en outre l'étape consistant à acquérir une liste d'informations de tâche concernant la tâche, qui satisfait des conditions de filtrage prédéterminées concernant la tâche, en réponse à une demande reçue en provenance du dispositif client.

12. Produit-programme informatique destiné à amener un ordinateur à exécuter un procédé de mise à disposition de services selon l'une quelconque des revendications 9 à 11.

13. Produit-programme informatique selon la revendication 12, **caractérisé en ce que** la pluralité de services est créée en réponse à une demande de démarrage de session reçue en provenance du dispositif client.

14. Produit-programme informatique selon la revendication 12 ou 13, **caractérisé en ce que** le procédé de mise à disposition de services comporte en outre l'étape consistant à gérer la session de l'unité de mise à disposition de services et du dispositif client.

15. Produit-programme informatique selon l'une quelconque des revendications 12 à 14, **caractérisé en ce qu'**une association qui associe un identifiant de session, lequel identifie la session, à l'unité de service, est fournie dans le dispositif de mise à disposition de services.

16. Produit-programme informatique selon l'une quelconque des revendications 12 à 15, **caractérisé en ce que** l'instruction est créée relativement aux contenus du traitement connexe au service.

17. Produit-programme informatique selon l'une quelconque des revendications 12 à 16, **caractérisé en ce qu'**un identifiant d'instruction qui identifie l'instruction est affecté de manière unique.

18. Produit-programme informatique selon l'une quelconque des revendications 12 à 17, **caractérisé en ce que** le procédé de mise à disposition de services comporte en outre l'étape consistant à fournir une interface à un gestionnaire de documents qui gère un document.

19. Produit-programme informatique selon l'une quelconque des revendications 12 à 18, **caractérisé en ce que** le procédé de mise à disposition de services comporte en outre l'étape consistant à fournir une interface à une unité d'accumulation d'enregistrements qui accumule des enregistrements concernant le traitement.

20. Produit-programme informatique selon l'une quelconque des revendications 12 à 18, **caractérisé en ce que** des étapes respectives du procédé de mise à disposition de services sont mises en oeuvre en utilisant des classes d'une programmation orientée objet.

21. Support d'enregistrement lisible par ordinateur destiné à amener un ordinateur à exécuter un procédé de mise à disposition de services selon l'une quelconque des revendications 9 à 11.
